# EUROPEAN PATENT APPLICATION

(11) **EP 2 448 267 A1**
(43) Date of publication of application: **02.05.2012**
(21) Application number: 11184896.6
(22) Date of filing: 12.10.2011
(51) Int. Cl.: H04N 7/26, H04N 7/30

(54) **Track-side fault detection system and method and apparatus for implementing the same**

(30) Priority: 29.10.2010 CN 201010526759
(71) Applicant: Siemens Aktiengesellschaft, 80333 München (DE)
(72) Inventor: Jie, Ming, 102208 Beijing (CN); Long, Fei, 100102 Beijing (CN); Pan, Li, 100102 Beijing (CN)

(57) **Abstract**

The embodiments of the present invention provide a track-side fault detection system (TFDS), which system comprises: a central station and at least one field station at the track side, with said field station including a control apparatus and at least two cameras; said cameras being for shooting a train when said train passes by and sending the shot image data to said control apparatus; said control apparatus being for performing image processing of the image data of said cameras using a built-in GPU and sending the processed image data to said central station via a network; and said central station being for detecting a fault of said train according to the image data from the control apparatus of said field station. The embodiments of the present invention further provide a method and apparatus for application at the track side of the TFDS. By using the embodiments of the present invention, the image data processing capability and efficiency of the TFDS can be significantly improved and the installation costs at the field stations can be significantly reduced.

## Description

### Technical field

The present invention relates to fault detection technology and, in particular, to a track-side fault detection system (TFDS), an image processing method, a data sending method, an image processing apparatus and a control apparatus.

### Background art

A TFDS is a security system deployed on rail transportation systems (such as railway, underground railway, etc.), which is also referred to as a train running fault dynamic image detection system or a truck dynamic fault detection system, and it is an intelligent system which is integrated with a set of technologies for high-speed digital image acquisition, large volume image data real-time processing, precise positioning, pattern recognition, intelligentization, networkization and informatization, and automatic control, so that such a system can dynamically detect any hidden and common faults in trains by using the shot images of the trains.

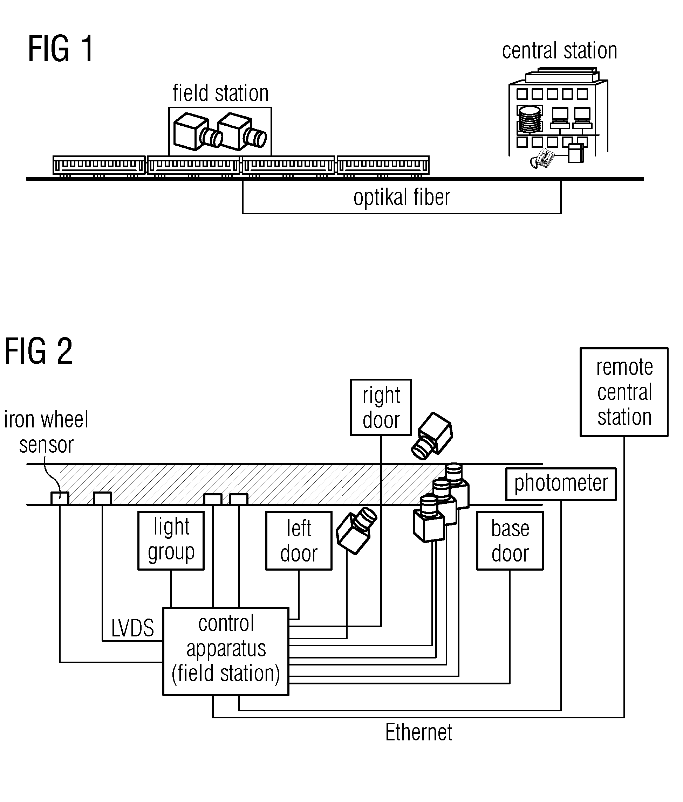

Fig. 1 is a schematic diagram of the composition structure of a TFDS in the prior art. As shown in Fig. 1, the TFDS comprises two parts: a field station and a central station, with the field station being located at the track side and connected to the central station via optical fibers. A plurality of high-speed high resolution (such as 1400 x 1024) cameras are installed at the field station, and these cameras are used for shooting the trains when they pass by at high speed so as to obtain the image data (such as photos of trains) of the trains, then a computer in the field station performs processing (such as compressing) of the image data of the trains, and then sends the processed image data to a remote central station via optical fibers. These image data are stored in the central station and can be manually checked by maintenance personnel or automatically checked by a machine vision system so as to detect train faults, for example: by viewing the photos of the trains, the maintenance personnel or the machine vision system can judge whether a wheel is damaged, whether a bolt falls off from the train, whether there are cracks in the base load-bearing structure of the train carriages, and so on.

It can be seen that the TFDS is able to dynamically detect any fault in the trains by using the shot image data of the trains so as to find the safety problems in the trains in a timely manner, and then timely and effective maintenance can be carried out to the rail transportation system and can effectively improve the maintenance efficiency and quality of the rail transportation system.

However, the effective running of the TFDS is based on real-time image data; therefore, how to improve the capability and efficiency for image data processing has become a key issue in the TFDS technology.

### Contents of the invention

The object of the present invention is to propose a TFDS, an image processing method, a data sending method, an image processing apparatus and a control apparatus, so as to improve the image data processing capability and efficiency of the TFDS.

In order to solve the above technical problems, the embodiments of the present invention provide the following technical solutions.

The embodiments of the present invention provide an image processing apparatus, said image processing apparatus comprising:
a first module for dividing raw image data into at least one block of NxN pixels, wherein N is any positive integer;
a second module for performing discrete cosine transform (DCT) on the block of NxN pixels from said first module;
a third module for quantizing the block of NxN pixels output by said second module after the DCT;
a fourth module for performing zigzag serialization on the block of NxN pixels output by said third module after the quantization; and
a fifth module for performing block entropy encoding on the block of NxN pixels output by said fourth module after the zigzag serialization, so as to obtain a target compressed file, with said target compressed file including a compressed data block corresponding to said block of NxN pixels.

The embodiments of the present invention further provide a control apparatus, said control apparatus comprising:
a data receiving module for receiving image data shot by a camera;
an image processing module which has a built-in graphic processing unit (GPU) for performing image processing of the image data received by said data receiving module using said GPU; and
a data sending module for sending the image data processed by said image processing module to a central station in said TFDS.

The embodiments of the present invention further propose a TFDS, which TFDS comprises: a central station and at least one field station at the track side, with said field station including a control apparatus and at least two cameras:
said cameras being for shooting a train when said train passes and sending the shot image data to said control apparatus;
said control apparatus being for performing image processing of the image data from said cameras using a built-in GPU and sending the processed image data to said central station via a network; and
said central station being for detecting a fault of said train according to the image data from the control apparatus of said field station.

The embodiments of the present invention further propose an image processing method in the track-side fault detection system (TFDS), said method comprising:
receiving raw image data shot by a camera;
performing image processing of said raw image data using a graphic processing unit (GPU); and
sending the processed image data to a central station via a network.

The embodiments of the present invention further propose a data sending method in the track-side fault detection system (TFDS), said method comprising:
dividing the raw image data into at least two blocks of NxN pixels, wherein N is any positive integer;
performing in parallel discrete cosine transform (DCT), quantitation and zigzag serialization on said blocks of N×N pixels;
performing block entropy encoding on said blocks of N×N pixels after the zigzag serialization to obtain a target compressed file; wherein said target compressed file comprises compressed data blocks corresponding to said blocks of N×N pixels; and
sending said target compressed file to a central station via a network.

By using the system, method and apparatus provided by the embodiments of the present invention, it can improve the image data processing capability and efficiency of the TFDS significantly, and can significantly reduce the installation costs at field stations.

### Brief description of the accompanying drawings

The above described and other features and advantages of the present invention will be described in detail hereinbelow for those skilled in the art to understand more clearly by reference to exemplary embodiments of the present invention in conjunction with the accompanying drawings, in which:
Fig. 1 is a schematic diagram of the composition structure of a TFDS in the prior art;
Fig. 2 is a schematic diagram of the composition structure of an example of a field station in a TFDS as proposed by the inventors of the present invention;
Fig. 3 is a schematic diagram of the connection relationship of cameras with an industrial personal computer (IPC) in an example of the field station in the TFDS as proposed by the inventors of the present invention;
Fig. 4 is a schematic diagram of the connection relationship of cameras with an IPC according to the embodiments of the present invention;
Fig. 5 is a flow chart of the procedure of an image compressing method according to the embodiments of the present invention;
Fig. 6 is a flow chart of the procedure for implementing the discrete cosine transform (DCT) during the image compressing procedure as shown in Fig. 5;
Fig. 7 is a schematic diagram of the zigzag serialization in the embodiments of the present invention;
Fig. 8 is a schematic diagram of a direct current (DC) value and an alternating current (AC) value after the zigzag serialization in the embodiments of the present invention;
Fig. 9 is a schematic diagram of the structure of a compressed data block according to the embodiments of the present invention;
Fig. 10 is a schematic diagram of the composition structure of a control apparatus for use at the track side in the TFDS according to the embodiments of the present invention;
Fig. 11 is a schematic diagram of an application example of the field station according to the embodiments of the present invention;
Fig. 12 is a schematic diagram of the structure of an image processing apparatus according to the embodiments of the present invention; and
Fig. 13 is a flow chart of the procedure of a data sending method in the TFDS according to the embodiments of the present invention.

### Exemplary embodiments

The present invention will be further described in detail hereinbelow in conjunction with the drawings and embodiments. It should be understood that the particular embodiments described here are merely for explaining the present invention and do not limit the present invention.

The embodiments of the present invention propose a TFDS, in which the composition structure of an example of the field station is as shown in Fig. 2. As shown in Fig. 2, the field station is deployed at the track side and connected to a remote central station via Ethernet and the field station comprises: a control apparatus, and a lamp group, a photometer, an iron wheel sensor and a camera group connected respectively to the control apparatus. In this case, the iron wheel sensor is installed on the track and used for sensing whether there is a train passing on the tracks so as to enable the control apparatus to start the camera group for shooting; the lamp group is used for illuminating according to the measurement results of the photometer; the camera group comprises three groups of five cameras in total, in which a first group (including one camera) is installed at the right side of the tracks, a second group (including one camera) is installed at the left side of the tracks, and a third group (including three cameras) is installed at the base of the tracks, and these three groups of cameras can shoot the train all around and the image data shot thereby are sent to the control apparatus. In addition, in order to protect the cameras when they are free (i.e. when not shooting), the field station further comprises three doors to protect these three groups of cameras respectively, and these three doors are also connected to the control apparatus with their ON/OFF state being controlled by the control apparatus. As shown in Fig. 2, the door for protecting a group of cameras installed at the right side of the tracks is installed at the right side of the tracks, which is referred to as the "right door"; the door for protecting a group of cameras installed at the left side of the tracks is installed at the left side of the tracks, which is referred to as the "left door"; and the door for protecting a group of cameras installed at the base of the tracks is installed at the base of the tracks, which is referred to as the "base door". The control apparatus not only controls each of the devices connected thereto, but also processes the image data from each of the cameras. In the embodiments of the present invention, the cameras can be imaging devices which are capable of shooting photos and/or producing videos.

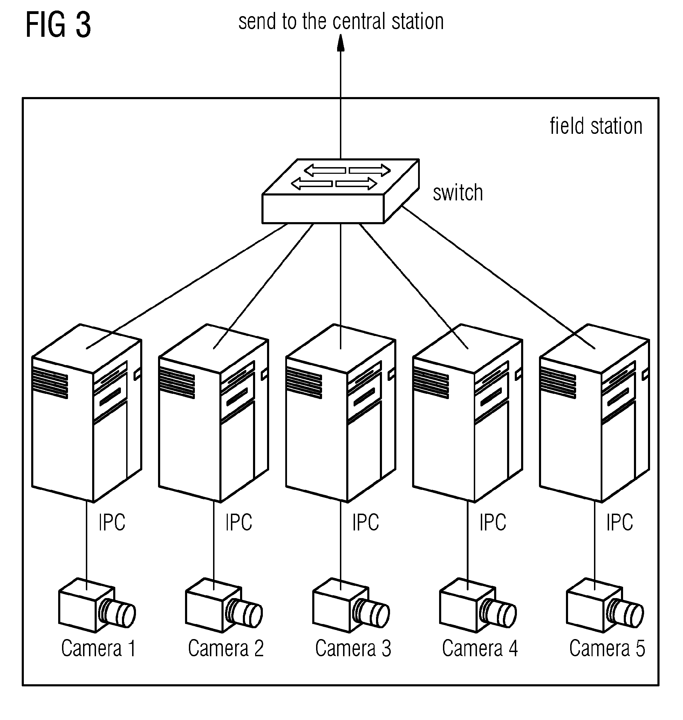

The above control apparatus can be implemented by using an IPC. Since the requirements of the TFDS regarding the instantaneity of the image data are relatively high, that is, the image data should be processed within a short time period after the camera has shot these image data so as to find the fault of the train in a timely manner and to instruct the train to stop at a station nearby for maintenance, in the TFDS provided by the embodiments of the present invention, the field station can comprise a plurality of IPCs for processing in parallel the image data shot by a plurality of cameras, so that the image data processing speed can meet the requirements for dynamic fault detection by the TFDS. Assuming that the image data shot by the cameras are photos, and these photos need to be compressed into the JPEG format, and at the same time the travel speed of the train needs to be taken into account, the field station needs to have an image compressing speed of at least 200 sheets/second to meet the requirements for the dynamic fault detection by the TFDS. Fig. 3 is a schematic diagram of the connection of cameras and an IPC in an example of the field station in the TFDS provided by the embodiments of the present invention. As shown in Fig. 3, the field station comprises five cameras (Camera 1, Camera 2, Camera 3, Camera 4, and Camera 5), then the control apparatus of the field station is required to comprise at least five IPCs, which are respectively connected to these five cameras and used for performing image processing of the image data shot by the cameras which are connected to the IPCs respectively; and then these five IPCs send the processed image data to the central station by means of a switch via the network.

However, the inventors of the present invention have found that the implementing solution of the field station as shown Fig. 3 has the following problems: due to the use of a plurality of IPCs, the installation size of the field station is too large, the implementing costs thereof will be increased significantly as the number of IPCs increases, and at the same time the maintenance complexity of the field station will also be greatly increased.

In order to reduce the maintenance complexity of the field station and at the same time also to reduce the implementing costs thereof, the embodiments of the invention further improve a field station, in which the control apparatus performs image processing by using a graphic processing unit (GPU). Here, the GPU is a core processor dedicated for graphics, which can process the raw image data in a highly parallel manner, so that the image processing speed of the control apparatus is significantly improved when using a GPU; and if the control apparatus is implemented using the IPC, then using a smaller number of IPCs or even a single IPC can meet the speed required by the TFDS system to process in parallel the image data from the plurality of cameras. The present invention does not limit the number of IPCs used by the field station; generally, the number of IPCs can be greatly reduced after using the GPU for image processing, and any implementing solution of image processing based on the GPU applied in the TFDS falls into the protection scope of the present invention.

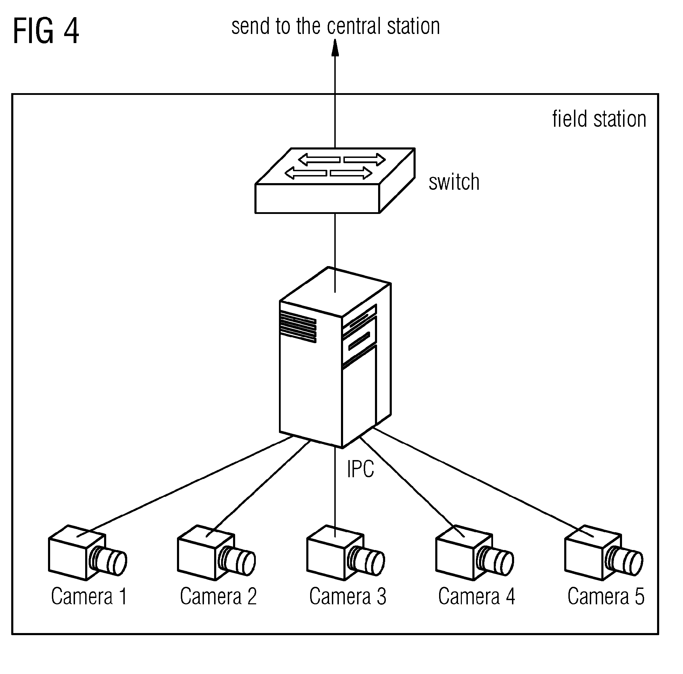

Fig. 4 is a schematic diagram of the connection relationship of cameras and an IPC in the embodiments of the present invention. As shown in Fig. 4, the field station comprises five cameras (Camera 1, Camera 2, Camera 3, Camera 4, and Camera 5), and the control apparatus of the field station only comprises one IPC, which connects these five cameras and is used for performing in parallel the image processing of the image data shot by these five cameras, and then sending the processed image data to the central station by means of a switch via the network. Due to the use of the GPU for image processing, in the embodiments of the present invention, the installation size of the field station will be reduced greatly, the installation costs will be reduced significantly, and the maintenance costs and complexity will also be reduced significantly.

In the embodiments of the present invention, the control apparatus can perform various types of image processing by using the GPU, including any one or any combination of: image preprocessing (e.g. image enhancement), image compressing and encoding, and image analyzing (e.g. feature recognizing and locating), and so on; and in the embodiments of the present invention, the image data concerned by the image processing can be a file in a variety of formats, such as photos, video files, etc. The particular embodiments for image processing based on a GPU in the embodiments of the present invention will be described hereinbelow by taking the image compressing as an example.

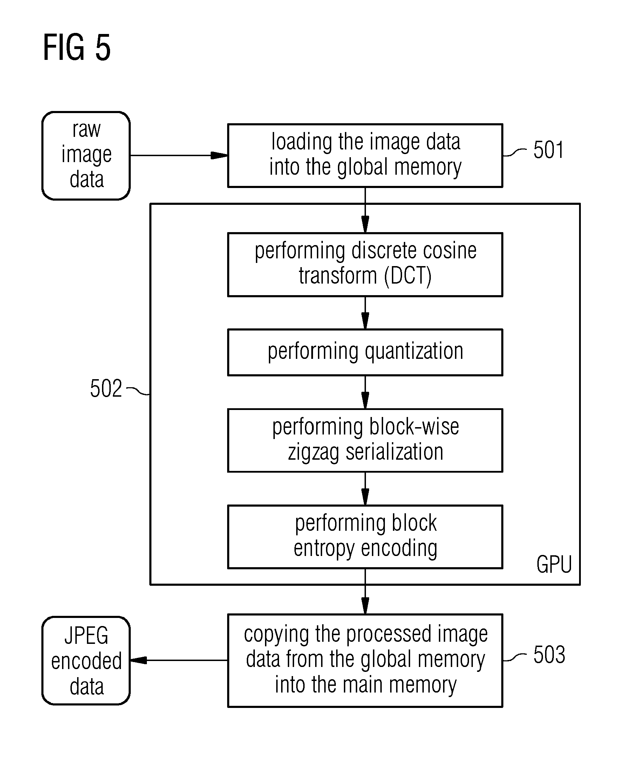

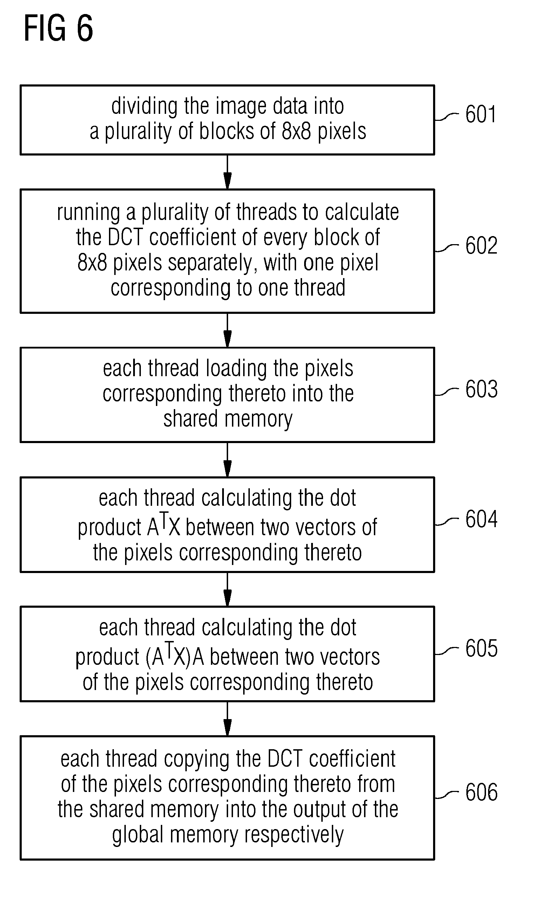

Fig. 5 is a flow chart of the procedure of an image compressing method according to the embodiments of the present invention. In the procedure as shown in Fig. 5, the IPC compresses the raw image data coming from the cameras into photos in the JPEG format, which procedure comprises:
Step 501: the IPC loads the raw image data coming from the cameras into a global memory.
Step 502: the GPU in the IPC compresses and encodes the raw image data in the global memory according to a JPEG compression algorithm, which successively comprises the following steps: discrete cosine transform (DCT), quantitation, block-wise zigzag serialization and block entropy encoding. Here, the particular implementing method regarding the DCT, quantitation, block-wise zigzag serialization and block entropy encoding will be described hereinbelow in detail in combination with Figs. 6 to 9.
Step 503: the IPC copies the image data (i.e. image data in the JPEG format) located in the global memory, after said data has been compressed and encoded, into a main memory, and then outputs the image data in the JPEG format to the central station.

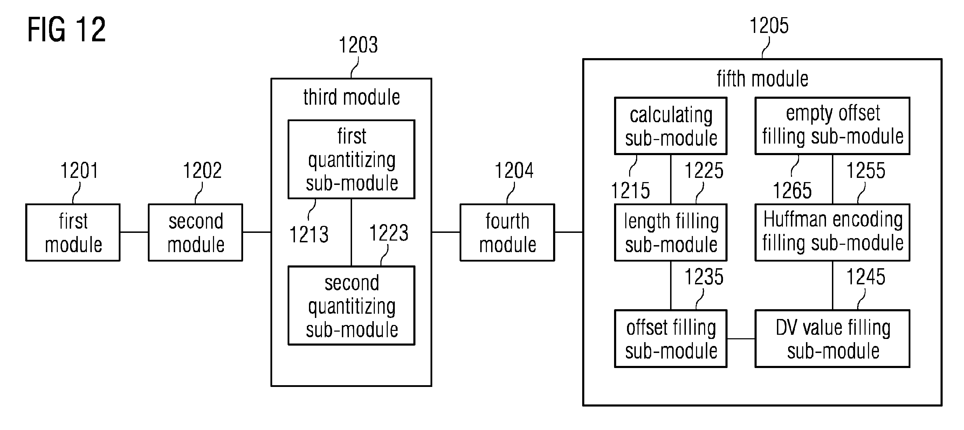

As shown in Fig. 12, the embodiments of the present invention provide an image processing apparatus, which apparatus, for example, can comprise five modules: a first module 1201 for dividing the raw image data into at least one block of N×N pixels, in which N is any positive integer; a second module 1202 for performing DCT on the block of N×N pixels from the first module 1201; a third module 1203 for quantizing the block of N×N pixels output by the second module 1202 after the DCT; a fourth module 1204 for performing zigzag serialization on the block of N×N pixels output by the third module 1203 after the quantitation; and a fifth module 1205 for performing block entropy encoding on the block of N×N pixels output by the fourth module 1204 after the zigzag serialization, so as to obtain a target compressed file, which target compressed file comprises a compressed data block corresponding to the block of N×N pixels respectively.

In the embodiments of the present invention, the image processing apparatus is specifically installed in the field station in the TFDS.

In this embodiment, the first module 1201 in this image processing apparatus, for example, can divide the raw image data into at least two blocks of N×N pixels. At this moment, the second module 1202, the third module 1203, the fourth module 1204 and the fifth module 1205 can all process in parallel a plurality of pixel blocks, which can meet the requirements regarding high-speed image processing.

In this embodiment, the fifth module 1205, for example, can comprise: a calculating sub-module 1215 for calculating the encoding length of a block of N×N pixels and the destination address of a compressed data block corresponding to this block of N×N pixels; a length filling sub-module 1225 for filling the destination address obtained from the calculating sub-module 1215 with the encoding length; an offset filling sub-module 1235 for filling an offset, which offset is the offset of the encoding of an AC value obtained after the zigzag serialization by the fourth module 1204; a DC value filling sub-module 1245 for filling a DC value obtained after the zigzag serialization by the fourth module 1204; a Huffman encoding filling sub-module 1255 for calculating the Huffman encoding of the AC value and filling this Huffman encoding; and an empty offset filling sub-module 1265 for filling an empty bit to complete a current byte. Since this image processing apparatus comprises the empty offset filling sub-module 1265, which can change each compressed data block into an integrated byte alignment memory space, the Huffman encoding of the AC value of each block of 8 × 8 pixels can be performed in parallel, and then it can significantly improve the efficiency of compressing and encoding and meet the requirements regarding the high-speed image processing.

In particular, in this embodiment, the sub-modules comprised in the fifth module 1205 meet one of the following conditions or any combination thereof: the encoding length filled by the length filling sub-module 1225 takes up one byte; the offset filled by the offset filling sub-module 1235 takes up one byte; the offset filling sub-module 1235 fills a location after the encoding length which has been filled by the length filling sub-module 1225 with this offset; the DC value filled by the DC value filling sub-module 1245 takes up two bytes; the DC value filling sub-module 1245 fills a location after the offset which has been filled by the offset filling sub-module 1235 with this DC value; the Huffman encoding filling sub-module 1255 fills a location after the DC value which has been filled by the DC value filling sub-module 1245 with this Huffman encoding; and the empty offset filling sub-module 1265 fills a location after the Huffman encoding which has been filled by the Huffman encoding sub-module 1255 with this empty bit.

In particular, in this embodiment, the second module 1202 performs the DCT on one block of N×N pixels using a plurality of threads when N is greater than 1. Specifically, the second module 1202 performs the DCT on each pixel in one block of N×N pixels using one thread.

In particular, in this embodiment, the third module 1203 comprises a first quantizing sub-module 1213 and/or a second quantizing sub-module 1223. The first quantizing sub-module 1213 uses a quantitation table based on the statistics of the lightness average of the acquired image data. The second quantizing sub-module 1223 uses a quantitation table based on the brightness at different time periods within one day.

Fig. 6 is a flow chart of the implementing procedure of the DCT during the image compressing procedure as shown in Fig. 5, in which what this procedure achieves is a two-dimensional DCT. As shown in Fig. 6, this procedure comprises:
Step 601: the raw image data is divided into a plurality of blocks of 8 × 8 pixels. Here, the present invention does not define the size of the blocks that the image data should be divided into, and the raw image data can be divided into blocks of any number of pixels, such as being divided into a block of 16 × 16 pixels.
Step 602: run a plurality of threads to calculate the DCT coefficient of each pixel block respectively, wherein one thread is used for calculating the DCT coefficient of one pixel, and for a block of 8 × 8 pixels, it is required to run 64 threads to calculate the DCT coefficients of 64 pixels.

Here, the GPU can be based on a general parallel computing architecture - a compute unified device architecture (CUDA) - to perform the image processing, and in a particular implementation, a plurality of CUDA blocks can run in parallel, with one CUDA block being equivalent to a stream processing block, which can run a large number of threads (e.g. 128 × 128 threads) in parallel; therefore, a plurality of pixel blocks can be processed by the GPU running a large number of CUDA threads in parallel.

Perform in parallel a two-dimensional DCT process on a plurality of blocks of 8 × 8 pixels; in which for each block of 8 × 8 pixels, perform the following steps 603 to 606:
Step 603: 64 threads load the pixels corresponding thereto in parallel into a shared memory, and then load a complete block of 8 × 8 pixels corresponding thereto into the shared memory.

In particular, in order to determine whether a complete block of 8 × 8 pixels has been loaded into the shared memory, there needs to be synchronization between 64 threads that corresponds to this block of 8 × 8 pixels, and when these 64 threads all pass the synchronization point, it can be determined that this block of 8 × 8 pixels has been loaded into the shared memory; here, how to achieve the synchronization of a plurality of threads and the setting of the synchronization point belong to the prior art.

Here, each pixel can be identified by a two-dimensional coordinate (ThreadIdx.x, ThreadIdx.y), and each thread can also be identified by a two-dimensional coordinate (ThreadIdx.x, ThreadIdx.y) correspondingly.

Step 604: 64 threads calculate the dot product *A^{T}X* of two vectors of the pixels corresponding respectively thereto, and the calculated results are stored in the shared memory.

Here, as to each block of 8 × 8 pixels, all waveforms are pre-computed and stored in a constant memory and form a two-dimensional array A, and each column in this two-dimensional array A stores the value of a basis function *A (x*, u*)*; it is assumed that the coordinate of a thread is (ThreadIdx.x, ThreadIdx.y), and the dot product of the ThreadIdx.y column of the cosine coefficient and the ThreadIdx.x column of the input block therefore has to be calculated. Here, the ThreadIdx.y column of the cosine coefficient is equivalent to the ThreadIdx.y line of A^{T}, and the ThreadIdx.x column of the input block refers to the ThreadIdx.x column of the block of 8 × 8 pixels which is loaded into the shared memory.

In particular, in order to determine whether the calculation of *A^{T}X* of each pixel in a complete block of 8 × 8 pixels has been completed, synchronization between 64 threads that corresponds to this block of 8 × 8 pixels needs to be carried out, and when all of these 64 threads pass the synchronization point, it can then be determined that the calculation of *A^{T}X* of each pixel of this block of 8 × 8 pixels has been completed.

Step 605: On the basis of the calculated results obtained in step 604, each of the 64 threads calculates the *(A^{T}X)A* (i.e., the DCT coefficient) of the pixel corresponding respectively thereto, and the calculated results are stored in the shared memory.

In particular, in order to determine whether the calculation of *(A^{T}X)A* of each pixel in a complete block of 8 x 8 pixels has been completed, synchronization between 64 threads that corresponds to this block of 8 × 8 pixels needs to be carried out, and when all of these 64 threads pass the synchronization point, it can then be determined that the calculation of *(A^{T}X)A* of each pixel of this block of 8 × 8 pixels has been completed.

Step 606: 64 threads respectively copy the *(A^{T}X)A* of the pixels corresponding thereto from the shared memory into the output of the global memory, thus copying the DCT coefficient of a complete block of 8 × 8 pixels corresponding thereto into the output of the global memory.

In particular, in order to determine whether the DCT coefficient of a complete block of 8 × 8 pixels is copied into the output of the global memory, synchronization between 64 threads that corresponds to this block of 8 × 8 pixels needs to be carried out, and when all of the 64 threads pass the synchronization point, it can then be determined that the DCT coefficient of this block of 8 × 8 pixels has been copied into the output of the global memory.

In the embodiments of the present invention, two quantitation tables can be used when performing the quantitation: one is based on the statistics of the lightness average of the image data of a train, and the other is based on the brightness at different time periods within one day. Here, the present invention can use a variety of currently available technologies in the particular implementing steps regarding quantitation, which will not be described in detail here.

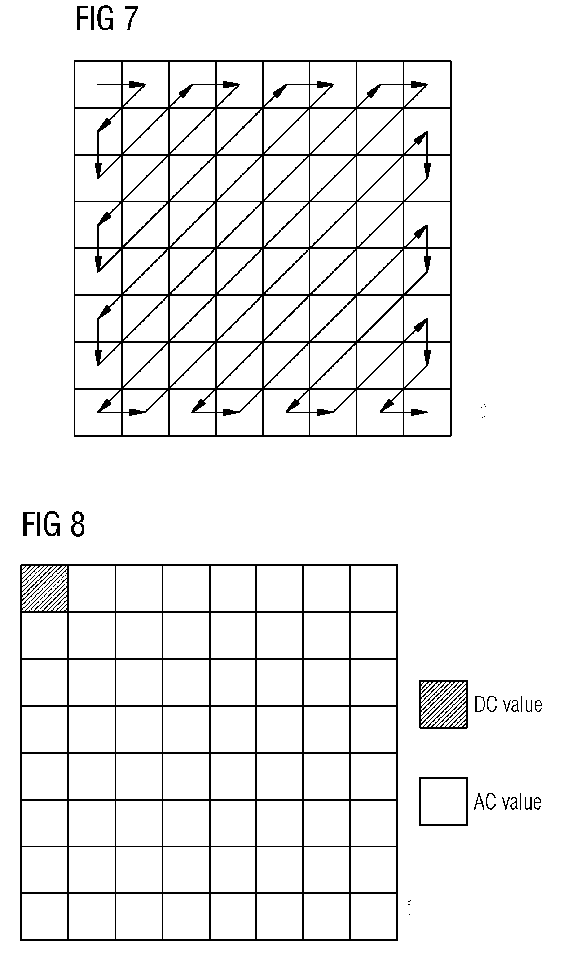

The GPU will perform the zigzag serialization on each block of 8 × 8 pixels after performing the DCT and quantitation. In this case, the GPU can run a plurality of threads to process a plurality of blocks of 8 × 8 pixels in parallel, and each thread is used for performing the zigzag serialization on each block of 8 × 8 pixels. Here, the particular implementing steps regarding the zigzag serialization can be achieved by using a variety of currently available technologies, and the particular implementation process is as shown in Fig. 7, which will not be described in detail here.

As to one block of 8 × 8 pixels, one direct current (DC) value and a plurality of alternating current (AC) values will be obtained after the the completion of the zigzag serialization. As shown in Fig. 8, in one block of 8 × 8 pixels after the zigzag serialization, the first element, i.e. an element with the coordinate of (0,0), is the DC value, while the remaining elements are the AC values.

In the embodiments of the present invention, in order to accelerate the speed of the entropy coding, the structure of the standard JPEG compressed data block is improved to make it suitable for the highly parallelized features of the GPU.

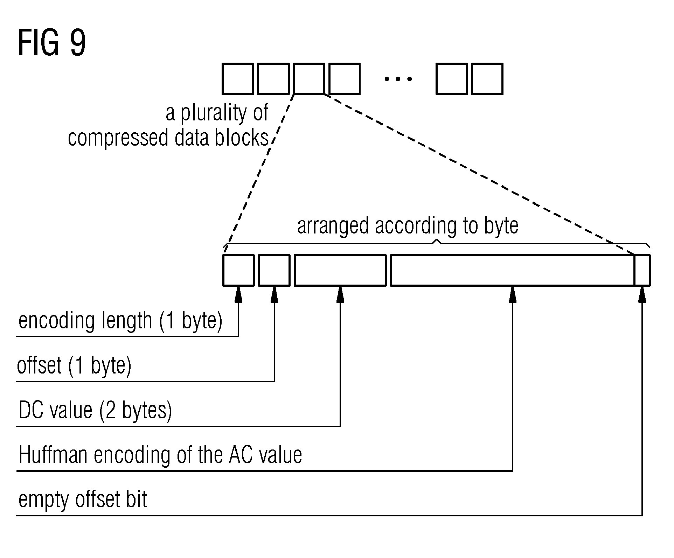

Fig. 9 is a schematic diagram of the structure of a compressed data block according to the embodiments of the present invention. In Fig. 9, the target compressed file is composed of a plurality of compressed data blocks, wherein each compressed block represents one block of 8 × 8 pixels, the structure of which being shown in Fig. 9. One compressed data block comprises the following fields: the encoding length of one byte, the offset of one byte, the DC value of two bytes, the Huffman encoding of the AC value, and an empty offset bit. In this case, the encoding length represents the byte length of the block of 8 × 8 pixels; the offset represents the offset of the encoding of the AC value, i.e. the valid bit length of the last byte (which is used for locating the invalid data during decoding); and the empty offset bit represents the invalid bit of the last byte.

In particular, the GPU runs a plurality of threads to generate in parallel a plurality of the above compressed data blocks after the zigzag serialization; each thread corresponds to one block of 8 × 8 pixels and a compressed data block thereof, and calculates the encoding length of the block of 8 × 8 pixels corresponding to itself and the destination address of its compressed data block, and performs encoding in the following manner and fills the destination address with the compressed data block:
Step 1: filling the destination address with the encoding length obtained by calculation;
Step 2: filling the offset and DC value; and
Step 3: calculating and filling the Huffman encoding of the AC value, and then filling an empty bit to complete a current byte, and these empty bits are known as empty offset bits.

Since the last byte of the above compressed data blocks is an invalid bit (i.e. empty offset bit), each compressed data block becomes the storage space with the whole byte aligned, and then the Huffman encoding of the AC value of each block of 8 × 8 pixels can be performed in parallel; thus the compression and encoding efficiency can be significantly improved.

After the above processing, the raw image data is compressed into a plurality of compressed data blocks, and these compressed data blocks are stored as binary target compressed files and are sent to the central station via optical fibers. At the central station, this compressed file is adjusted as a typical JPEG file and is stored in the database.

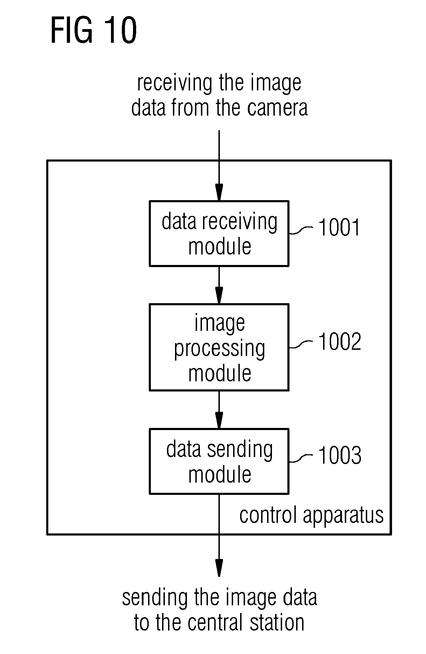

The embodiments of the present invention further propose a control apparatus applied at the track side in the TFDS. This control apparatus, for example, is located in the field station of the above TFDS. Fig. 10 is a schematic diagram of the composition structure of a control apparatus applied at the track side in the TFDS according to the embodiments of the present invention. As shown in Fig. 10, this control apparatus comprises at least: a data receiving module 1001, an image processing module 1002, and a data sending module 1003, in which:
the data receiving module 1001 is used for receiving image data from a camera;
the image processing module 1002 which has a built-in GPU is used for performing image processing of the image data received by the data receiving module 1001 using this GPU; and
the data sending module 1003 is used for sending the image data processed by the image processing module 1002 to the central station.

In this embodiment, the GPU in this image processing module 1002, for example, can be implemented by the image processing apparatus as shown in Fig. 12.

The control apparatus shown in Fig. 10 relates to the function modules relevant to the image processing, and a variety of particular implementing methods relating to the image processing have been described above in detail, which will not be described here redundantly; and this control apparatus can further comprise a variety of currently available function modules to achieve the control of various components (such as lamp group, camera, iron wheel sensor, etc.) in a field station, and these function modules will not be shown here but they all fall into the protection scope of this invention. In addition, the above control apparatus can be implemented as a hardware device, and can also be implemented as a virtual apparatus by way of software, which virtual apparatus can run in the equipment (such as the IPC) for centralized control in the field station so as to complete the image processing based on the GPU.

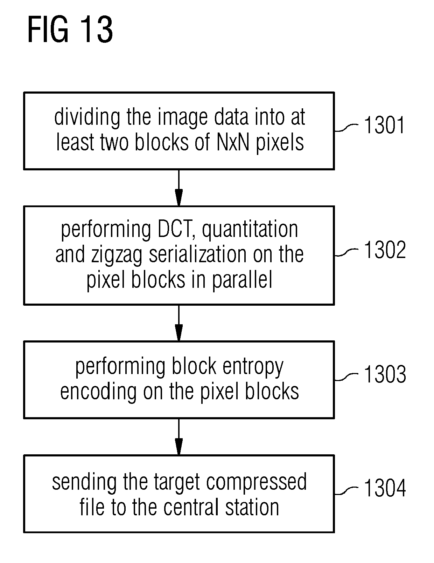

The embodiments of the present invention further provide a data sending method in the TFDS, and as shown in Fig. 13, this method comprises:
Step 1301: dividing the raw image data into at least two blocks of N×N pixels, in which N is any positive integer;
Step 1302: performing DCT, quantitation and zigzag serialization on each block of N×N pixels in parallel;
Step 1303: performing block entropy encoding on each block of N×N pixels after the zigzag serialization to obtain a target compressed file, wherein the target compressed file comprises the compressed data block corresponding to each of said blocks of N×N pixels; and
Step 1304: sending the target compressed file to the central station via a network.

In this embodiment, for the particular implementation of the particular DCT, quantitation, zigzag serialization and entropy encoding, reference can be made to the above embodiments, which will not be described here redundantly.

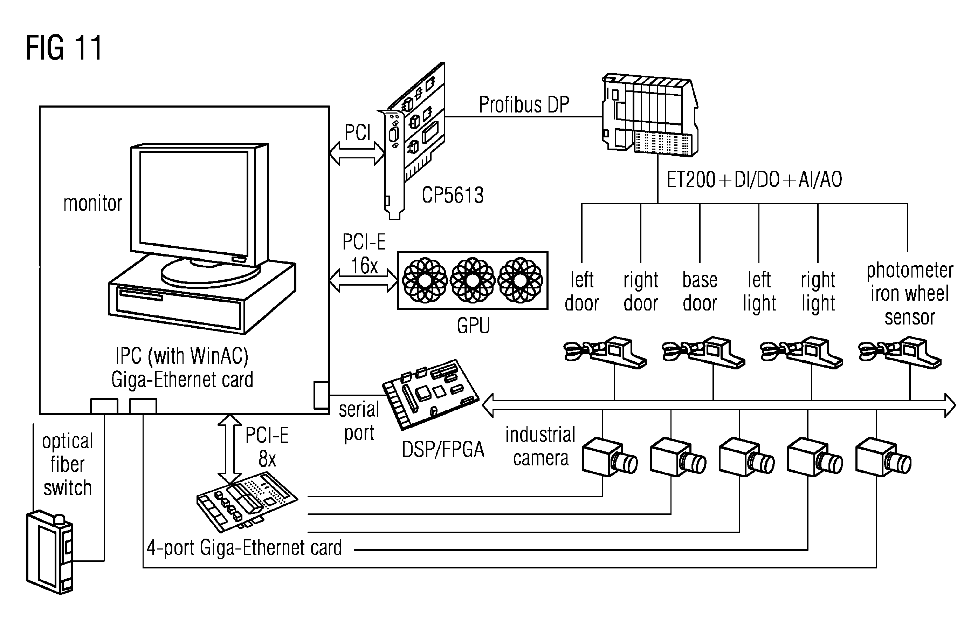

Fig. 11 is a schematic diagram of an application example of the field station according to the embodiments of the present invention. As shown in Fig. 11, the field station comprises a single IPC, which IPC is installed with a GPU and a process monitoring system SIMANTIC WinAC, which WinAC system can control the lamp group, each of the doors, each of the cameras and so on using a ProfiBUS communication card (such as CP5613) and a ProfiBUS remote input/output port (such as ET200S). The digital signal processing/field programmable gate array (DSP/FPGA) interface board in Fig. 11 is used for processing signals from the iron wheel sensor (such as Axis sensor) and triggering five cameras (such as DALSA digital camera). The IPC receives the uncompressed image data via a 4-port Giga-Ethernet card or four one-port Ethernet cards, and outputs the compressed image data to the central station using a Giga-Ethernet card and an optical fiber switch.

By using the above various embodiments of the present invention, the image processing speed at a field station in a TFDS can be improved significantly, and taking the image compressing as an example, the compression speed of a personal computer PC (E5420 + GTX 260+) compressing an image of 1400 × 1024 pixels can take up to 4.9 ms; in addition, since the field station uses a single IPC based on a GPU for processing the image data, it enables the installation size and material costs at the field station to be reduced significantly, and the maintenance costs and difficulty thereof also to be reduced correspondingly.

The embodiments described above can be cross-referenced, for example, for the particular implementation of the apparatus and the method of its use reference can be made to the method embodiments, and for the method embodiments reference can also be made to the specific description of the apparatus embodiments.

What are described above are merely preferred embodiments of the present invention, and are not to limit the present invention, and any modifications, equivalents and improvements within the spirit and principle of the present invention should be covered by the protection scope of the present invention.

## Claims

1. An image processing apparatus, comprising:
a first module (1201) for dividing the raw image data into at least one block of N×N pixels, wherein N is any positive integer;
a second module (1202) for performing a discrete cosine transform (DCT) on the block of N×N pixels from said first module;
a third module (1203) for quantizing the block of N×N pixels output by said second module after the DCT;
a fourth module (1204) for performing zigzag serialization on the block of N×N pixels output by said third module after the quantitation; and
a fifth module (1205) for performing block entropy encoding on the block of N×N pixels output by said fourth module after the zigzag serialization, so as to obtain a target compressed file, with said target compressed file including a compressed data block corresponding to said block of N×N pixels.

2. The apparatus as claimed in claim 1, wherein
said first module (1201) is particularly used for dividing said raw data image into at least two blocks of N×N pixels;
said second module (1202) is particularly used for performing in parallel the DCT on the blocks of N×N pixels from said first module;
said third module (1203) is particularly used for quantizing in parallel the blocks of N×N pixels output by said second module after the DCT;
said fourth module (1204) is particularly used for performing in parallel the zigzag serialization on the blocks of N×N pixels output by said third module after the quantitation; and
said fifth module (1205) is particularly used for performing in parallel the block entropy encoding on the blocks of N×N pixels output by said fourth module after the zigzag serialization, so as to obtain the target compressed file.

3. The apparatus as claimed in claim 1, wherein said fifth module (1205) comprises:
a calculating sub-module (1215) for calculating the encoding length of said block of N×N pixels and the destination address of a compressed data block corresponding to said block of N×N pixels;
a length filling sub-module (1225) for filling the destination address obtained by said calculating sub-module with said encoding length;
an offset filling sub-module (1235) for filling an offset, with said offset being the offset of the encoding of an alternating current (AC) value obtained after the zigzag serialization by said fourth module;
a direct current (DC) value filling sub-module (1245) for filling a DC value obtained after the zigzag serialization by said fourth module;
a Huffman encoding filling sub-module (1255) for calculating the Huffman encoding of said AC value and for filling said Huffman encoding; and
an empty offset filling sub-module (1265) for filling an empty bit to complete a current byte.

4. The apparatus as claimed in claim 3, wherein one of the sub-modules comprised in said fifth module meets one of the following conditions or any combination thereof:
said encoding length filled by said length filling sub-module (1225) takes up one byte;
said offset filled by said offset filling sub-module (1235) takes up one byte;
said offset filling sub-module (1235) fills a location after said encoding length which has been filled by said length filling sub-module (1225) with said offset;
said DC value filled by said DC value filling sub-module (1245) takes up two bytes;
said DC value filling sub-module (1245) fills a location after said offset which has been filled by said offset filling sub-module with said DC value;
said Huffman encoding filling sub-module (1255) fills a location after said DC value which has been filled by said DC value filling sub-module (1245) with said Huffman encoding; and
said empty offset filling sub-module (1265) fills a location after said Huffman encoding which has been filled by said Huffman encoding sub-module (1256) with said empty bit.

5. The apparatus as claimed in any one of claims 1 to 4, wherein said second module performs DCT on one block of N×N pixels using a plurality of threads when N is greater than 1.

6. The apparatus as claimed in any one of claims 1 to 4, wherein said apparatus is utilized in a field station in a track-side fault detection system (TFDS).

7. A control apparatus, comprising:
a data receiving module (1001) for receiving image data shot by a camera;
an image processing module (1002) which has a built-in graphic processing unit (GPU) for performing image processing of the image data received by said data receiving module using said GPU; and
a data sending module (1003) for sending the image data processed by said image processing module to a central station.

8. The control apparatus as claimed in claim 7, wherein said GPU comprises an image processing apparatus as claimed in any one of claims 1 to 4.

9. The control apparatus as claimed in claim 7,
wherein said control apparatus is utilized in a field station in a track-side fault detection system (TFDS).

10. A field station, said field station being located at the track side and said field station comprising a control apparatus as claimed in claim 7.

11. A track-side fault detection system (TFDS), comprising: a central station and at least one field station at the track side, with said field station including a control apparatus and at least two cameras:
said cameras being for shooting a train when said train passes and sending the shot image data to said control apparatus;
said control apparatus being for performing image processing of the image data from said cameras using a built-in GPU and sending the processed image data to said central station via a network; and
said central station being for detecting a fault of said train according to the image data from the control apparatus of said field station.

12. The system as claimed in claim 11, wherein the image processing performed by said control apparatus using said GPU comprises one of the following or any combination thereof:
image preprocessing, image compressing and encoding, and
image analyzing.

13. The system as claimed in claim 11 or 12, wherein said control apparatus is a single industrial personal computer (IPC).

14. An image processing method in a track-side fault detection system (TFDS), said method comprising:
receiving raw image data shot by a camera;
performing image processing of said raw image data using a graphic processing unit (GPU); and
sending the processed image data to a central station via a network.

15. The method as claimed in claim 14, wherein said performing image processing using said GPU comprises one of the following or any combination thereof: image preprocessing, image compressing and encoding, and image analyzing.

16. The method as claimed in claim 15, wherein said performing image compressing of said raw image data using said GPU comprises:
dividing said raw image data into at least two blocks of N×N pixels, wherein N is any positive integer; and
running at least two threads to perform in parallel image compressing of said blocks of N×N pixels and generate a target compressed file, wherein the image compressing of one the blocks of N×N pixels comprises discrete cosine transform (DCT), quantitation, zigzag serialization, and block entropy encoding, and said target compressed file comprises a plurality of compressed data blocks corresponding to said blocks of N×N pixels.

17. The method as claimed in claim 16, wherein when N is greater than 1, the DCT on one of the blocks of N×N pixels comprises running at least two threads to perform the DCT on each pixel in said blocks of N×N pixels respectively, wherein one thread is used for performing DCT on one pixel.

18. The method as claimed in claim 16, wherein a quantitation table used in said quantitation is a quantitation table based on the statistics of the lightness average of the image data, or a quantitation table based on the brightness at different time periods within one day.

19. The method as claimed in claim 16, wherein the block entropy encoding of one of the blocks of N×N pixels comprises:
running a thread to perform the following steps:
calculating the encoding length of said block of N×N pixels and the destination address of a compressed data block of said block of N×N pixels;
filling said destination address with said encoding length;
obtaining a direct current (DC) value after filling an offset and said zigzag serialization, wherein said offset is an offset of the encoding of an alternating current (AC) value obtained after said zigzag serialization;
calculating the Huffman encoding of said AC value and filling the Huffman encoding of said AC value; and
filling an empty bit to complete a current byte.

20. A data sending method in a track-side fault detection system (TFDS), said method comprising:
dividing raw image data into at least two blocks of N×N pixels, wherein N is any positive integer;
performing in parallel discrete cosine transform (DCT), quantitation and zigzag serialization on said blocks of N×N pixels;
performing block entropy encoding on said blocks of N×N pixels after said zigzag serialization to obtain a target compressed file, wherein said target compressed file comprises compressed data blocks corresponding to said blocks of N×N pixels; and
sending said target compressed file to a central station via a network.

21. The method as claimed in claim 20, wherein performing block entropy encoding on one block of N×N pixels comprises:
calculating the encoding length of said blocks of N×N pixels and the destination address of compressed data blocks of said blocks of N×N pixels;
filling said destination address with said encoding length;
obtaining a direct current (DC) value after filling an offset and said zigzag serialization, wherein said offset is an offset of the encoding of an alternating current (AC) value obtained after said zigzag serialization;
calculating the Huffman encoding of said AC value and filling the Huffman encoding of said AC value; and
filling an empty bit to complete a current byte.
